# FASCICULE DE BREVET EUROPEEN

(11) **EP 2 072 959 B1**
(45) Date de publication et mention de la délivrance du brevet: **09.03.2016**
(21) Numéro de dépôt: 08170691.3
(22) Date de dépôt: 04.12.2008
(51) Int. Cl.: G01D 5/06, H01H 36/00, G01D 5/14, G01D 5/25

(54) **Appareil à moyens de réglage sans contact**
Apparat mit kontaktlosen Regelungsmitteln
Device with contactless adjustment means

(30) Priorité: 19.12.2007 FR 0759970
(43) Date de publication de la demande: 24.06.2009
(73) Titulaire: Schneider Electric Industries SAS, 92500 Rueil-Malmaison (FR)
(72) Inventeur: Gailledrat, Joël, 16430 Champniers (FR)
(74) Mandataire: Dufresne, Thierry

(56) Documents cités:
- WO-A-97/16123
- DE-A1- 4 438 880
- DE-A1-102005 032 032
- FR-A- 2 804 240
- GB-A- 2 332 395
- US-A1- 2005 162 227

## Description

La présente invention se rapporte à un appareil comportant au moins un organe d'actionnement permettant de régler de façon manuelle un paramètre ou un mode de fonctionnement.

Actuellement, des appareils tels que les détecteurs, par exemple les détecteurs optiques, doivent être configurés en réglant manuellement leur mode de fonctionnement et certains de leurs paramètres. Les paramètres à régler sont par exemple une valeur de seuil ou une valeur de portée tandis que le mode de fonctionnement à régler est par exemple le mode reflex ou le mode proximité. Pour configurer un paramètre de réglage ou un mode de fonctionnement, certains détecteurs utilisent par exemple un bouton poussoir présent sur l'enveloppe du produit. Le bouton est directement relié à des mécanismes de déclenchement présents dans l'enveloppe du détecteur. L'enveloppe du détecteur présente donc une ouverture à travers laquelle est animé le bouton, cette ouverture rompant l'étanchéité de l'enveloppe du détecteur. L'étanchéité du détecteur peut alors par exemple être obtenue par injection d'une résine dans l'enveloppe du produit. Cependant cette étanchéité ne peut être parfaite du fait de la présence de l'ouverture formée sur l'enveloppe pour accueillir le bouton. Un joint torique est bien utilisé pour assurer l'étanchéité du bouton dans son ouverture mais cette solution reste insuffisante, le joint étant de faible dimension, fragile et difficile à positionner.

Il est connu du document WO97/16123 un dispositif de commutation comportant une enveloppe externe sur laquelle sont disposés plusieurs boutons. Chaque bouton porte un aimant permanent apte à commander un capteur de type effet Hall ou reed placé à l'intérieur de l'enveloppe. Ce dispositif présente l'inconvénient de nécessiter un bouton distinct et plusieurs aimants pour son fonctionnement et son paramétrage.

Le document US2005162227 décrit un appareil selon l'état de la technique

Le but de l'invention est de proposer un appareil doté d'une solution de paramétrage manuel aisé ne compromettant pas son étanchéité.

Ce but est atteint par un appareil tel que décrit dans la revendication 1.

Selon l'invention, les moyens de réglage sans contact de l'appareil permettent d'assurer aisément son réglage sans nécessiter d'ouverture à travers son enveloppe. En effet, grâce aux capteurs employés dans l'invention, aucune ouverture n'est formée à travers l'enveloppe de l'appareil. L'étanchéité peut par exemple être assurée par injection par centrifugation d'une résine à l'intérieur de l'enveloppe de l'appareil. De plus, la suppression des boutons classiques de paramétrage permet de s'affranchir d'étapes d'assemblage et donc de réduire le coût de fabrication de l'appareil.

Selon un premier mode de réalisation de l'invention, chaque capteur est de type TOR.

Selon ce premier mode de réalisation, le signal envoyé par chaque capteur correspond par exemple à une valeur du paramètre ou à un mode de fonctionnement particulier de l'appareil et en ce que pour chacune de ses positions, l'aimant active un seul capteur.

Selon ce premier mode de réalisation, le signal envoyé par chaque capteur correspond par exemple à une incrémentation ou décrémentation du paramètre ou à une modification du mode de fonctionnement. Dans cette configuration, l'appareil comporte un premier capteur apte à envoyer un premier signal représentatif d'une incrémentation du paramètre et un second capteur apte à envoyer un second signal représentatif d'une décrémentation du paramètre.

Selon un deuxième mode de réalisation, chaque capteur présente deux états actifs pour envoyer deux signaux distincts représentatifs de deux valeurs distinctes du paramètre ou de deux modes de fonctionnement distincts de l'appareil.

Selon une particularité de l'invention, l'appareil comprend des moyens de verrouillage/déverrouillage de l'organe d'actionnement.

L'appareil de l'invention sera par exemple un détecteur.

D'autres caractéristiques et avantages vont apparaître dans la description détaillée qui suit en se référant à un mode de réalisation donné à titre d'exemple et représenté par les dessins annexés sur lesquels :
- La figure 1 représente un exemple d'application de l'invention,
- La figure 2 représente une partie arrière d'un détecteur sur laquelle est montée une la bague de réglage,
- La figure 3 représente sous une autre vue les mêmes éléments que la figure 2,
- Les figure 4A et 4B représentent, vue de profil, la partie arrière du détecteur et illustrent les deux positions prises par la bague de réglage, respectivement en position déverrouillée et verrouillée,
- Les figures 5A et 5B montrent en détail la bague de réglage respectivement en position déverrouillée et en position verrouillée,
- Les figures 6 à 8 montrent un micro-interrupteur magnétique pouvant être utilisé comme capteur dans l'appareil de l'invention,
- La figure 9 montre une variante de réalisation du micro-interrupteur magnétique représenté sur les figures 6 à 8.

L'invention concerne un appareil qui comporte des moyens de réglage d'un paramètre ou d'un mode de fonctionnement tel que par exemple un détecteur 1 ou un disjoncteur. Dans le cas du disjoncteur, il s'agit par exemple de régler le calibre alors que dans un détecteur 1, il s'agit par exemple de régler un paramètre tel qu'une valeur de seuil ou une valeur de portée ou un mode de fonctionnement tel que par exemple reflex, proximité, proximité avec effacement d'arrière plan. La description qui suit est réalisée pour un détecteur 1, mais elle doit être comprise pour tout autre type d'appareils nécessitant un réglage.

Un détecteur 1 comporte une enveloppe 10, par exemple cylindrique et intégralement fermée, renfermant des moyens d'émission et/ou réception d'un signal et des moyens de traitement 50 du signal reçu, tels qu'un microprocesseur. Les moyens de traitement 50 sont également connectés à des moyens de mémorisation 51 pour mémoriser le paramètre du détecteur ou son mode de fonctionnement. Dans la plupart des détecteurs, ces paramètres et/ou mode de fonctionnement doivent être réglés manuellement par l'utilisateur. Selon l'invention, un tel réglage peut par exemple être effectué à l'aide d'un ou plusieurs curseurs, une ou plusieurs bagues de réglages et/ou un ou plusieurs disques rotatifs montés sur l'enveloppe du détecteur.

La description qui suit est réalisée pour un détecteur paramétrable à l'aide d'une bague de réglage 6. Cependant, il faut comprendre que les caractéristiques définies ci-dessous peuvent tout à fait être mises en oeuvre pour un détecteur configurable à l'aide d'un curseur de réglage ou d'un disque rotatif monté sur l'enveloppe 10 du détecteur.

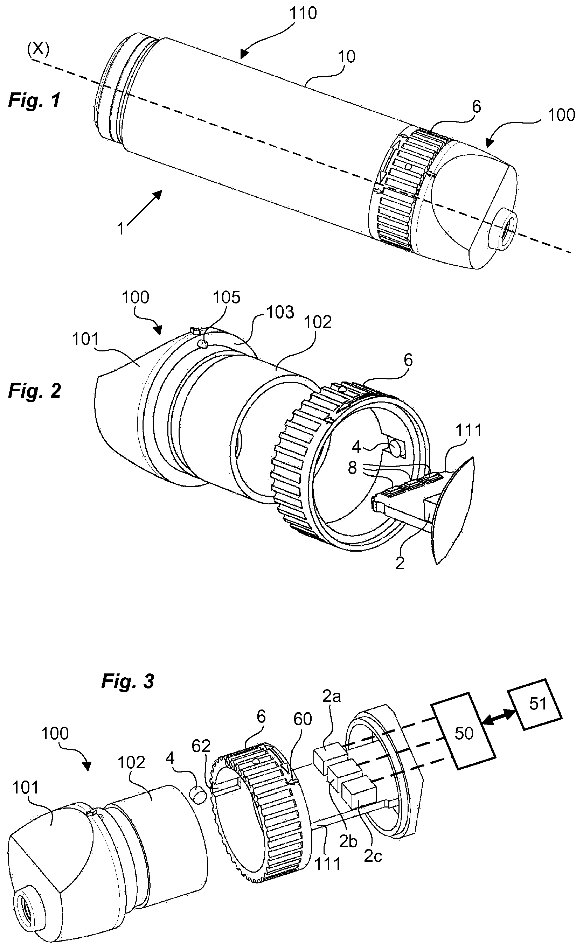

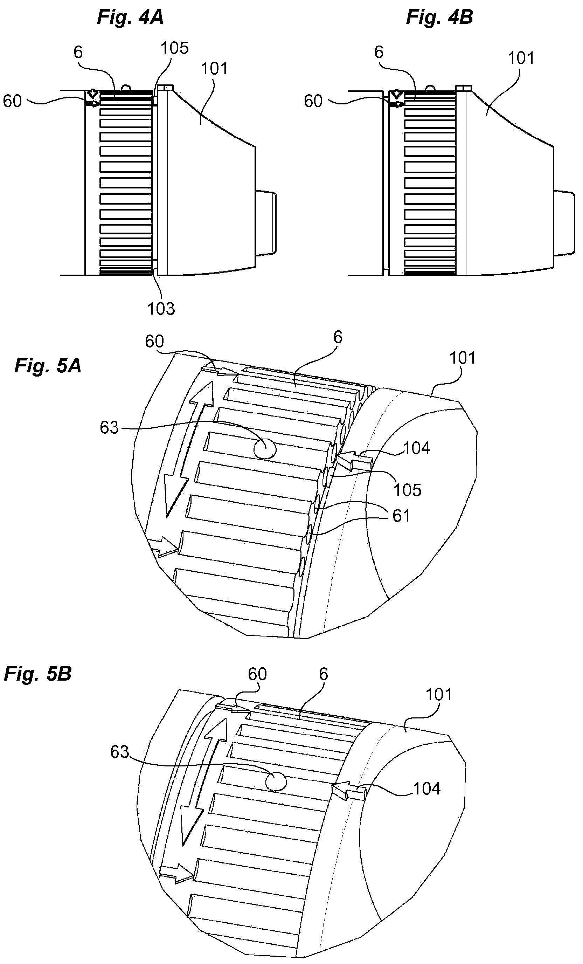

En référence aux figures 1 à 5B, l'enveloppe cylindrique 10 du détecteur présente une partie avant 110 portant notamment les moyens d'émission/réception d'un signal et une partie arrière 100 pouvant se fixer sur la partie avant et comportant notamment les moyens de traitement 50. La partie arrière 100 comporte un embout 101 prolongée par une plage cylindrique 102 formant un épaulement 103 avec l'embout 101. Une bague de réglage 6 permettant par exemple de régler un paramètre ou de définir un mode de fonctionnement du détecteur est montée de manière coaxiale autour de la plage cylindrique 102. La bague présente d'une part un débattement axial en translation entre l'épaulement 103 et l'extrémité de la partie avant 110 de l'enveloppe 10 de manière à pouvoir prendre deux positions axiales déterminées et est d'autre part montée rotative autour de l'axe (X) du détecteur 1. En tournant, la bague 6 permet de sélectionner une valeur du paramètre ou un mode de fonctionnement du dispositif. Pour cela, la bague 6 comporte plusieurs index 60 susceptibles de se positionner en face d'un index fixe 104 réalisé sur la partie avant 110 de l'enveloppe 10. Bien entendu, l'inverse peut être réalisé avec un seul index sur la bague 6 et plusieurs index correspondants l'enveloppe 10 du détecteur 1. En outre selon l'invention, le détecteur 1 comporte des moyens de verrouillage de la bague 6 pour la bloquer en rotation une fois que le réglage a été effectué. Ces moyens de verrouillage se présentent par exemple sous la forme de plusieurs orifices 61 (figure 5A) répartis sur une partie de la circonférence de la bague 6 et aptes à coopérer avec un téton 105 fixe formé sur l'épaulement 103 de la partie arrière 100 du détecteur 1. Chaque orifice 61 correspond à une position angulaire déterminée de la bague 6. Une fois le réglage du paramètre ou du mode de fonctionnement effectué il suffit, pour verrouiller la bague, de translater la bague 6 d'une première position axiale vers une seconde position axiale dans laquelle le téton 105 s'insère dans un orifice 61 correspondant (voir figures 4A à 5B). La bague 6 est alors bloquée en rotation. Le verrouillage de la bague 6 permet notamment de retrouver les derniers réglages effectués sur le détecteur et de pouvoir utiliser ces réglages pour établir un diagnostic lorsque le détecteur tombe en panne et qu'il doit être examiné.

Selon l'invention, la bague de réglage 6 comporte un logement 62 (figure 3) destiné à recevoir un aimant permanent 4. Le logement 62 et l'aimant permanent 4 sont formés de manière à ne pas perturber la rotation de la bague 6 autour de la plage cylindrique 102 de l'enveloppe 10. Ainsi lors d'une rotation de la bague 6, l'aimant permanent 4 peut prendre différentes positions selon la position angulaire de la bague 6 par rapport à l'index 104 fixe de réglage.

Selon l'invention, une carte électronique 111 est insérée dans la partie avant 110 de l'enveloppe 10. Cette carte électronique 111 comporte notamment les moyens de mémorisation 51 et les moyens de traitement 50 connectés sur la carte 111 à un ou plusieurs capteurs 2a, 2b, 2c (désignés 2 de manière générale) (figure 2). Ces capteurs 2 permettent de détecter la position de l'aimant 4 lors de la rotation de la bague 6. Chaque capteur 2 employé peut par exemple être associé à un ou plusieurs modes de fonctionnement ou à un ou plusieurs paramètres de réglage.

Dans une première variante de réalisation, les capteurs 2 sont par exemple de type Tout Ou Rien (TOR). Ils sont alors activés dans une certaine position de l'aimant 4 et désactivés dans une autre position de l'aimant 4.

Selon l'invention, en fonction de la position de la bague 6 par rapport aux index identifiant différentes valeurs de paramètres ou différents modes de fonctionnement, l'aimant 4 prend différentes positions et vient activer un ou plusieurs capteurs 2, chacun des capteurs 2 activés envoyant un signal aux moyens de traitement 50. En fonction du ou des signaux reçus, les moyens de traitement 50 configurent le détecteur 1 à la valeur du paramètre ou au mode de fonctionnement du détecteur correspondant à la position de la bague 6. Dans la configuration la plus simple, chaque capteur 2 activé peut envoyer un signal correspondant à une valeur d'un paramètre ou à un mode de fonctionnement particulier du détecteur 1. Dans cette configuration, selon le capteur 2 activé par l'aimant 4, la valeur du paramètre ou le mode de fonctionnement correspondant à ce capteur 2 est réglé dans le détecteur 1. Des diodes électroluminescentes 8 (figure 2) montées sur la carte 111 s'allument en fonction du mode de fonctionnement ou du paramètre sélectionné avec la bague de réglage 6. Une fenêtre 63 réalisée sur la bague 6 permet alors à l'utilisateur de visualiser la diode allumée correspondant au mode de fonctionnement ou au paramètre sélectionné.

Dans une autre configuration non représentée, le détecteur 1 peut comporter par exemple deux capteurs 2, un premier capteur destiné à envoyer un signal correspondant à une incrémentation du paramètre mémorisé et un second capteur destiné à envoyer un signal correspondant à une décrémentation du paramètre. Le premier capteur peut également être employé pour faire passer le détecteur d'un mode de fonctionnement n à un mode de fonctionnement n+1 tandis que le second capteur peut être employé pour faire passer le mode de fonctionnement n au mode de fonctionnement n-1. Dans cette autre configuration, la bague de réglage est par exemple montée sur un ressort la ramenant dans une position médiane de manière à pouvoir tourner de part et d'autre de cette position médiane pour incrémenter/décrémenter le paramètre ou modifier le mode de fonctionnement. Deux index sont réalisés sur le détecteur pour marquer les deux positions fugitives de la bague.

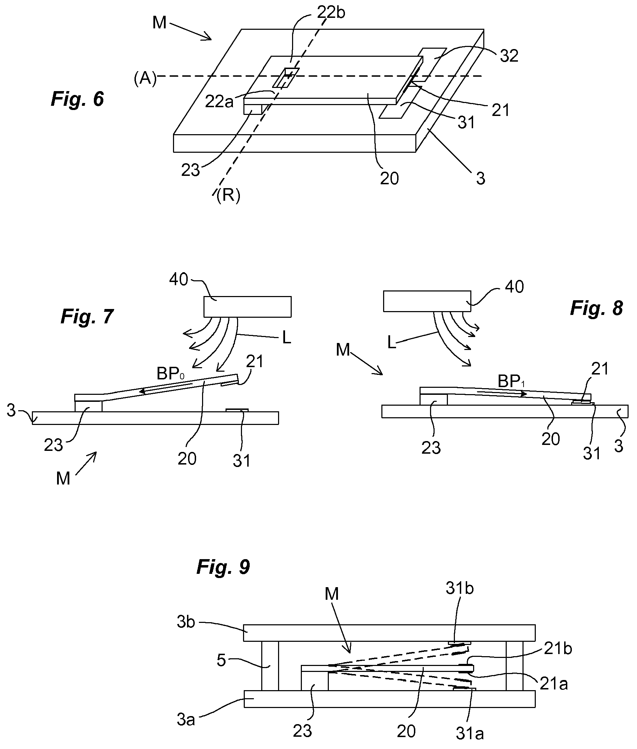

Les capteurs 2 sont par exemple à effet Hall ou peuvent être des lames souples de type "reed". Les capteurs 2 employés peuvent également être des micro-interrupteurs M magnétiques de type MEMS (Micro Electro-Mechanical System) tels que représentés sur les figures 6 à 8. D'autres types de capteurs 2 pouvant remplir les mêmes fonctions peuvent bien entendu être employés.

En référence aux figures 6 à 8, un micro-interrupteur M magnétique de type MEMS comporte un élément mobile monté sur un substrat 3 fabriqué dans des matériaux comme le silicium, le verre, des céramiques ou sous forme de circuits imprimés. Le substrat 3 porte par exemple sur sa surface 30 au moins deux contacts ou pistes conductrices 31, 32 planes, identiques et espacées, destinées à être reliées électriquement par un contact électrique mobile 21 afin d'obtenir la fermeture d'un circuit électrique. L'élément mobile est composé d'une membrane 20 déformable présentant au moins une couche en matériau ferromagnétique et portant à une extrémité le contact mobile 21. Le matériau ferromagnétique est par exemple du type magnétique doux et peut être par exemple un alliage de fer et de nickel (« permalloy » Ni₈₀Fe₂₀). La membrane 20 du micro-interrupteur M présente un axe longitudinal (A) et est reliée, à l'une de ses extrémités, par l'intermédiaire de bras de liaison 22a, 22b, à un ou plusieurs plots 23 d'ancrage solidaires du substrat 3. La membrane 20 est apte à pivoter par rapport au substrat 3 suivant un axe (R) de rotation perpendiculaire à son axe longitudinal (A). Les bras 22a, 22b de liaison forment une liaison élastique entre la membrane 20 et le plot 23 d'ancrage et sont sollicités en flexion lors du pivotement de la membrane 20.

Selon l'orientation d'une composante magnétique créée dans la membrane 20, la membrane 20 peut prendre une position basse, dite de fermeture, dans laquelle son contact mobile 21 relie électriquement les deux pistes 31, 32 conductrices fixes de manière à fermer le circuit électrique ou une position haute, relevée, dite d'ouverture, dans laquelle son contact mobile 21 est éloigné des deux pistes conductrices de manière à ouvrir le circuit électrique. L'actionnement magnétique du micro-interrupteur M est plus particulièrement illustré sur les figures 7 et 8. Il consiste à appliquer un champ magnétique créé par un aimant permanent 40. Selon ce mode d'actionnement, la membrane 20 ferromagnétique se déplace entre ses deux états en s'alignant sur les lignes de champ L du champ magnétique généré par l'aimant permanent 40. Le champ magnétique créé par l'aimant permanent 40 présente en effet des lignes de champ L dont l'orientation génère une composante magnétique (BP₀, BP₁) dans une couche ferromagnétique de la membrane 20 suivant son axe longitudinal (A). Cette composante magnétique (BP₀, BP₁) générée dans la membrane 20 engendre un couple magnétique imposant à la membrane 20 de prendre l'une de ses positions d'ouverture (figure 7) ou de fermeture (figure 8). En déplaçant l'aimant permanent 40, il est donc possible de soumettre la membrane 20 à deux orientations différentes des lignes de champ L du champ magnétique de l'aimant permanent 40 et de la faire basculer entre ses deux positions. Ce principe d'actionnement est parfaitement applicable au détecteur 1 de l'invention pour régler le paramètre ou le mode de fonctionnement du détecteur à l'aide de l'aimant 4 porté par la bague 6. Dans le cas du détecteur 1 cité comme exemple de l'invention, l'aimant permanent 4 effectue un mouvement suivant un arc de cercle. Les capteurs 2 doivent donc être positionnés de manière précise pour pouvoir être activés ou désactivés dans des positions angulaires déterminées de l'aimant 4.

Dans une seconde variante de réalisation, chaque capteur 2 est par exemple capable d'envoyer plusieurs signaux distincts selon la position de l'aimant 4. Ils peuvent être du type à effet Hall permettant d'envoyer aux moyens de traitement 50 au moins deux signaux distincts en fonction de l'intensité du champ magnétique généré par l'aimant permanent 4.

En outre, les micro-interrupteurs M magnétiques décrits ci-dessus peuvent être modifiés pour envoyer deux signaux distincts aux moyens de traitement 50. La figure 9 montre un tel micro-interrupteur. Le micro-interrupteur est utilisé pour la commande de deux circuits électriques distincts en employant les deux positions haute et basse prises par la membrane 20. Selon cette configuration, un premier substrat 3a porte deux électrodes 31 a d'un premier circuit électrique et un second substrat 3b, par exemple disposé au-dessus, parallèlement au premier substrat 3a, porte deux électrodes 31 b d'un second circuit électrique. Les électrodes 31 a, 31 b sont disposées symétriquement par rapport au plan horizontal passant par l'axe (A) de la membrane 20 du micro-interrupteur. Les deux substrats sont par exemples reliés par des éléments 5 de liaison. Le micro-interrupteur selon l'invention est solidaire d'au moins l'un des substrats 3a, 3b. La membrane 20 pivotante comporte également sur chacune de ses faces un contact mobile 21 a, 21 b. Dans sa position d'équilibre (en trait plein sur la figure 9), les deux circuits électriques sont ouverts et la membrane 20 est parallèle aux deux substrats. Dans une première position extrême (en pointillés sur la figure 9), la membrane 20 vient en contact avec les premières électrodes 31a pour fermer le premier circuit électrique tandis que dans sa seconde position extrême opposée (en pointillés sur la figure 9), la membrane 20 vient en contact avec les secondes électrodes 31 b pour fermer le second circuit électrique. Ainsi, deux signaux distincts peuvent être envoyés aux moyens de traitement à partir d'un même capteur selon la position prise par l'aimant permanent. Un ou plusieurs de ces capteurs peuvent être montés sur la carte électronique 111 selon le nombre de valeurs du paramètre à régler ou selon le nombre de modes de fonctionnement disponible.

Il est bien entendu que l'on peut, sans sortir du cadre de l'invention, tel que décrit dans les revendications imaginer d'autres variantes et perfectionnements de détail et de même envisager l'emploi de moyens équivalents.

## Revendications

1. Appareil comprenant une enveloppe (10) intégralement fermée sur laquelle est monté un organe d'actionnement permettant de régler un paramètre ou un mode de fonctionnement de l'appareil, l'appareil comportant un aimant (4) permanent entraîné en mouvement par l'organe d'actionnement et générant un champ magnétique, **caractérisé en ce que** :
- l'organe d'actionnement est une bague rotative (6) portant l'aimant permanent (4) et apte à prendre plusieurs positions angulaires déterminées autour d'un axe (X) de l'appareil,
- L'appareil comporte une carte électronique (111) insérée suivant un plan axial,
- la carte électronique comporte des moyens de traitement (50) pour traiter chaque signal et pour modifier le paramètre ou le mode de fonctionnement de l'appareil en fonction de chaque signal,
- l'appareil comporte plusieurs capteurs (2) connectés sur la carte électronique aux moyens de traitement et pilotables par effet magnétique selon la position angulaire prise par la bague rotative, chaque capteur (2) étant apte à envoyer au moins un signal correspondant à une modification du paramètre ou du mode de fonctionnement de l'appareil,
- les capteurs sont des micro-interrupteurs magnétiques (M) de type MEMS, comportant chacun une membrane déformable présentant au moins une couche en matériau ferromagnétique et prenant une position d'ouverture ou une position de fermeture en s'alignant sur des lignes de champ (L) du champ magnétique généré par l'aimant permanent (40).

2. Appareil selon la revendication 1, **caractérisé en ce que** chaque capteur (2) est de type TOR.

3. Appareil selon la revendication 2, **caractérisé en ce que** le signal envoyé par chaque capteur (2) correspond à une valeur du paramètre ou à un mode de fonctionnement particulier de l'appareil et **en ce que** pour chacune de ses positions, l'aimant (4) active un seul capteur (2).

4. Appareil selon la revendication 2, **caractérisé en ce que** le signal envoyé par chaque capteur (2) correspond à une incrémentation ou décrémentation du paramètre ou à une modification du mode de fonctionnement.

5. Appareil selon la revendication 4, **caractérisé en ce qu'**il comporte un premier capteur apte à envoyer un premier signal représentatif d'une incrémentation du paramètre et un second capteur apte à envoyer un second signal représentatif d'une décrémentation du paramètre.

6. Appareil selon la revendication 1, **caractérisé en ce que** chaque capteur (2) présente deux états actifs pour envoyer deux signaux distincts représentatifs de deux valeurs distinctes du paramètre ou de deux modes de fonctionnement distincts de l'appareil.

7. Appareil selon l'une des revendications 1 à 6, **caractérisé en ce que** la bague rotative (6) entoure l'enveloppe (10) de l'appareil.

8. Appareil selon l'une des revendications 1 à 7, **caractérisé en ce qu'**il comprend des moyens de verrouillage/déverrouillage de l'organe d'actionnement.

9. Appareil selon l'une des revendications 1 à 8, **caractérisé en ce qu'**il consiste en un détecteur (1).

## Patentansprüche

1. Apparat, der eine ganz geschlossene Umhüllung (10) aufweist, auf der ein Betätigungsorgan angeordnet ist, das es ermöglicht, einen Parameter oder einen Betriebsmodus des Apparats zu regeln, wobei der Apparat einen Permanentmagneten (4) aufweist, der durch das Betätigungsorgan in Bewegung gesetzt wird und ein Magnetfeld erzeugt, **dadurch gekennzeichnet, dass**:
- das Betätigungsorgan ein drehbarer Ring (6) ist, der den Permanentmagneten (4) trägt und geeignet ist, mehrere festgelegte Winkelpositionen um eine Achse (X) des Apparats einzunehmen,
- der Apparat eine elektronische Karte (111) aufweist, die entlang einer axialen Ebene eingefügt ist,
- die elektronische Karte Verarbeitungsmittel (50) aufweist, um jedes Signal zu verarbeiten und um den Parameter oder den Betriebsmodus des Apparats in Abhängigkeit von jedem Signal zu ändern,
- der Apparat mehrere Sensoren (2) aufweist, die auf der elektronischen Karte mit den Verarbeitungsmitteln verbunden und durch magnetische Wirkung nach der Winkelposition, die durch den drehbaren Ring eingenommen wird, steuerbar sind, wobei jeder Sensor (2) geeignet ist, mindestens ein Signal zu senden, das einer Änderung des Parameters oder des Betriebsmodus des Apparats entspricht,
- die Sensoren Mikromagnetschalter (M) vom Typ des MEMS-Magnetschalters sind, die jeweils eine verformbare Membran aufweisen, die mindestens eine Schicht aus ferromagnetischem Material aufweist und eine Öffnungs- und eine Schließposition einnimmt, indem sie sich auf Feldlinien (L) des magnetischen Feldes ausrichtet, das von dem Permanentmagneten (40) erzeugt wird.

2. Apparat nach Anspruch 1, **dadurch gekennzeichnet, dass** jeder Sensor (2) vom Typ des EIN/AUS-Sensors ist.

3. Apparat nach Anspruch 2, **dadurch gekennzeichnet, dass** das Signal, das von jedem Sensor (2) gesendet wird, einem Wert eines Parameters oder einem besonderen Betriebsmodus des Apparats entspricht, und dass der Magnet (4) für jede seiner Positionen einen einzigen Sensor (2) aktiviert.

4. Apparat nach Anspruch 2, **dadurch gekennzeichnet, dass** das Signal, das von jedem Sensor (2) gesendet wird, einem Erhöhen oder Verringern des Parameters oder einer Änderung des Betriebsmodus entspricht.

5. Apparat nach Anspruch 4, **dadurch gekennzeichnet, dass** er einen ersten Sensor, der geeignet ist, ein erstes Signal zu senden, das für ein Erhöhen des Parameters repräsentativ ist, und einen zweiten Sensor aufweist, der geeignet ist, ein zweites Signal zu senden, das für ein Verringern des Parameters repräsentativ ist.

6. Apparat nach Anspruch 1, **dadurch gekennzeichnet, dass** jeder Sensor (2) zwei aktive Zustände aufweist, um zwei unterschiedliche Signale zu senden, die für zwei unterschiedliche Werte des Parameters oder für zwei unterschiedliche Betriebsmodi des Apparats repräsentativ sind.

7. Apparat nach einem der Ansprüche 1 bis 6, **dadurch gekennzeichnet, dass** der drehbare Ring (6) die Umhüllung (10) des Apparats umgibt.

8. Apparat nach einem der Ansprüche 1 bis 7, **dadurch gekennzeichnet, dass** er Mittel zum Verriegeln/Entriegeln des Betätigungsorgans aufweist.

9. Apparat nach einem der Ansprüche 1 bis 8, **dadurch gekennzeichnet, dass** er aus einem Detektor (1) besteht.

## Claims

1. Device comprising an integrally closed enclosure (10) on which an actuation unit is mounted enabling the adjustment of a parameter or operating mode of the device, the device comprising a permanent magnet (4) driven in its movement by the actuation unit and generating a magnetic field, **characterized in that**:
- the actuation unit is a rotating ring (6) bearing the permanent magnet (4) and capable of assuming several predetermined angular positions around an axis (X) of the device;
- the device comprises an electronic card (111) inserted along an axial plane;
- the electronic card comprises processing means (50) for processing each signal and for changing the parameter or the operating mode of the device depending on each signal;
- the device comprises one or more sensors (2) connected on the electronic card to the processing means and that can be guided by magnetic effect according to the angular position assumed by the rotating ring, each sensor (2) being capable of sending at least one signal corresponding to a modification of the parameter or of the operating mode of the device;
- the sensors are magnetic microswitches (M) of the MEMS type, each comprising a deformable membrane having at least one layer made of ferromagnetic material and taking an open position or a closed position by aligning itself on field lines (L) of the magnetic field generated by the permanent magnet (40).

2. Device according to Claim 1, **characterized in that** each sensor (2) is of the on/off type.

3. Device according to Claim 2, **characterized in that** the signal sent by each sensor (2) corresponds to a value of the parameter or to a particular operating mode of the device and **in that** for each of its positions the magnet (4) activates a single sensor (2).

4. Device according to Claim 2, **characterized in that** the signal sent by each sensor (2) corresponds to an incrementation or decrementation of the parameter or to a change in the operating mode.

5. Device according to Claim 4, **characterized in that** it comprises a first sensor capable of sending a first signal representing an incrementation of the parameter and a second sensor capable of sending a second signal representing a decrementation of the parameter.

6. Device according to Claim 1, **characterized in that** each sensor (2) has two active states for sending two distinct signals representing two distinct values of the parameter or two distinct operating modes of the device.

7. Device according to one of Claims 1 to 6, **characterized in that** the rotating ring (6) surrounds the enclosure (10) of the device.

8. Device according to one of Claims 1 to 7, **characterized in that** it comprises means for locking/unlocking the actuation unit.

9. Device according to one of Claims 1 to 8, **characterized in that** it consists of a detector (1).
